# EUROPÄISCHE PATENTSCHRIFT

(11) **EP 1 491 477 B1**
(45) Veröffentlichungstag und Bekanntmachung des Hinweises auf die Patenterteilung: **29.08.2007**
(21) Anmeldenummer: 03405454.4
(22) Anmeldetag: 23.06.2003
(51) Int. Cl.: B65H 29/38

(54) **Vorrichtung zum Bilden von Stapeln**
Device for forming stacks
Dispositif pour former des piles

(43) Veröffentlichungstag der Anmeldung: 29.12.2004
(73) Patentinhaber: Müller Martini Holding AG, 6052 Hergiswil (CH)
(72) Erfinder: Vind Nielsen, Erik, 6700 Esbjerg (DK)

(56) Entgegenhaltungen:
- EP-A- 0 784 027
- DE-A- 2 740 423
- DE-A- 3 100 003
- US-A- 5 727 925

## Beschreibung

Die Erfindung betrifft eine Einrichtung zur wahlweisen Bildung von Stapeln aus mehreren, auf einem Transportweg hintereinander geförderten Produkten und/oder zur Aenderung der Reihenfolge von auf einem Transportweg nacheinander geförderten Produkten, bestehend aus einer die Produkte transportierenden Fördervorrichtung und wenigstens einer, die Produkte auf dem Förderweg von der Fördervorrichtung aufnehmenden und zurücksetzenden Hubvorrichtung, die ein die Produkte an der Unterseite erfassendes, wenigstens an einer Seite eines aus einem Förderabschnitt der Fördervorrichtung gebildeten Förderelementes ein rechtwinklig zur Förderrichtung anheb- und unter die Tragfläche der Fördervorrichtung absenkbares Huborgan aufweist, wobei das Huborgan durch mehrere an einem Tragwerk in Abständen rechtwinklig zur Förderrichtung abstehende Tragstäbe ausgebildet ist.

Eine Einrichtung der eingangs genannten Art ist beim Axel Springer Verlag in Darmstadt, Deutschland zur Verarbeitung von gestapelten Druckerzeugnissen im Einsatz.
Diese besteht aus einem schmalen Förderband, das über einen Tisch verläuft, auf welchem Stapel aus gebündelten Zeitschriften gebildet werden. Zu diesem Zweck ist beidseits des Förderbandes jeweils eine höhenverstellbare Gabel vorgesehen, die unter die das beim Stapeln stillstehende Förderband seitlich überstehenden Zeitschriftenbündel greift und diese anhebt, so dass nach einem nächsten Förderschritt das angehobene Zeitschriftenbündel auf das angekommene abgesenkt werden kann. Das Anheben der sich am Förderband gegenüberliegenden Gabeln erfolgt gemeinsam durch synchron angetriebene Zahnriemen

Ein bekanntes Verfahren und eine Vorrichtung nach DE 31 00 003 A dienen dem Stapeln von flachem Gut, insbesondere Mineralfaserplatten, in einer Produktionslinie, wobei eine aus einer oder mehreren Platten gebildete Lage in einen Stapelraum eingebracht und dort mit zuvor eingebrachten und bereits einen Teilstapel bildenden Lagen von deren Unterseite her zugeführt werden.

Die vorveröffentlichte DE 27 40 423 A vermittelt eine Maschine zum Uebereinanderlegen von Vorstapeln aus Papiertüchern zu einem Endstapel. Die Vorstapel werden mit einem Transportband zugeführt. Die Maschine besteht aus einer heb- und absenkbaren Hubvorrichtung mit in horizontaler Richtung verschiebbaren gabelförmigen Greifern, die in einem das Transportband einschliessenden Hubgestell angeordnet sind, das mit der Hubvorrichtung verbunden ist.

Die vorveröffentlichte US 5 727 925 beschreibt eine Einrichtung zum Stapeln von jeweils zwei, auf einem Förderer hinter einander zugeführten Behältern, die nacheinander in eine Liftstation gelangen und in eine darüber angeordnete Bühne zum Stapeln angehoben werden.

Bei einer bekannten Produktionseinheit nach der EP 0 784 027 A1 passieren Produkte auf einem Förderband eine Entnahmestation, in der sie nach Deformation des Förderbandes durch eine Entnahmevorrichtung von dem Förderband abgehoben werden.

Aufgabe der Erfindung ist es, eine einfache Einrichtung zu schaffen, mit der mehrere Produkte in kürzerer Zykluszeit zu einem Stapel geformt werden können.

Erfindungsgemäss wird die Aufgabe dadurch gelöst, dass
a) die Fördervorrichtung ein Fördertrum eines umlaufenden Förderbandes aufweist, dessen Tragfläche im Wirkbereich des Huborgans mehrfach unterbrochen ist,
b) die Unterbrüche der Tragfläche durch unter die Tragfläche und zurück umgelenkte Abschnitte des Förderbandes gebildet sind,
c) die umgelenkten Abschnitte des Förderbandes durch gemeinsam absenkbare Rollen gebildet sind und
d) die Rollen gemeinsam über die Tragfläche der Fördervorrichtung anhebbar sind.

Als einfaches Mittel zur Aufhebung der Unterbrüche in der Tragfläche erweist sich eine mit dem Förderband verbundene Spannvorrichtung, durch welche das Förderband nach dem Ausheben der Rollen nachspannbar ist.

Zur Fixierung der Produkte beim Stapeln ist oberhalb resp. am oberen Hubende des Huborgans eine formatverstellbare Vertikalführung vorgesehen, in die die von unten zum Stapeln angehobenen Produkte eingeführt werden.

Es ist vorteilhaft, wenn eine Erfassungsposition der Produkte auf der Tragfläche unterhalb der Vertikalführung angeordnet ist, sodass die Produkte in senkrechter Richtung angehoben werden können.

Anschliessend wird die Erfindung unter Bezugnahme auf die Zeichnung, auf die bezüglich aller in der Beschreibung nicht näher erwähnten Einzelheiten verwiesen wird, anhand eines Ausführungsbeispiels erläutert. In der Zeichnung zeigen:
- Fig. 1: eine schematische Seitenansicht der erfindungsgemässen Einrichtung,
- Fig. 2: eine schematische Seitenansicht der Einrichtung gemäss Fig. 1, mit hochgestellten Vorrichtungen und hochgestellten Einzugsrollen,
- Fig. 3: eine Ansicht der Einrichtung in Transportrichtung gemäss Pfeil F in Fig. 1 mit in den Transportweg eingefahrenen Huborganen,
- Fig. 4: eine Ansicht der Einrichtung gemäss Fig. 3 mit ausgefahrenen Huborganen,
- Fig. 5A - 5F: einen Stapelvorgang der Einrichtung in einer schrittweisen Darstellung.

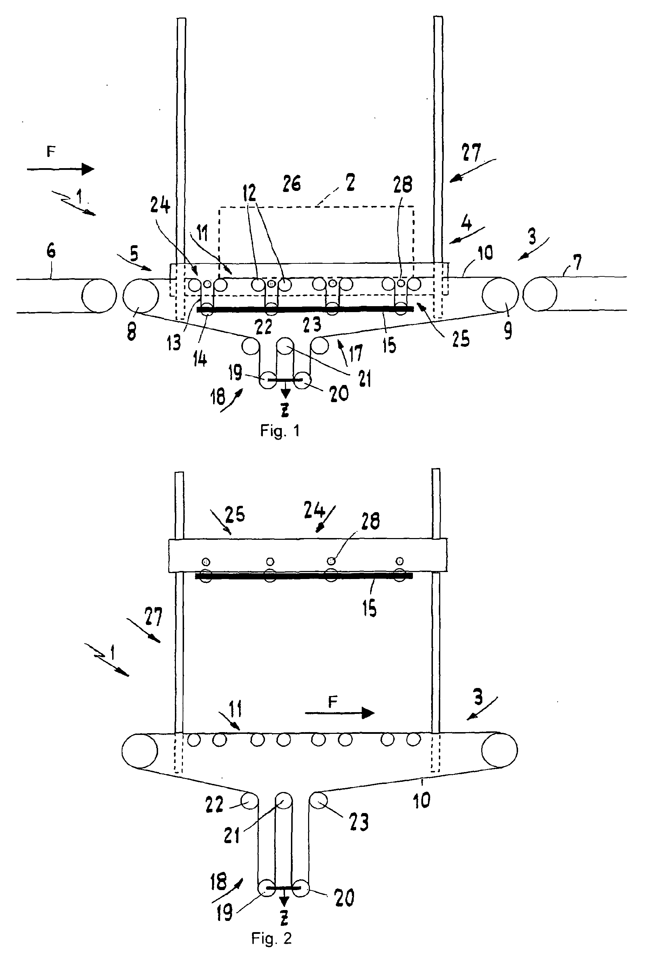

Fig. 1 zeigt eine Einrichtung 1 zur Bildung vorbestimmter Stapel aus mehreren, auf einem Transportweg hintereinander in Pfeilrichtung F geförderten, aufeinander stapelbaren Produkten 2, die auch zur Aenderung der Reihenfolge von auf einem Transportweg nacheinander geförderter Produkte 2 verwendbar ist. Die Produkte können gebündelt oder einzelne Zeitschriften, Broschüren, Bücher, Werkstücke oder anderes stapelbares Gut sein. Die Produkte 2 werden von einer Fördervorrichtung 3 transportiert, d.h. an einer Stelle auf dem Förderweg, wo eine Stapelvorrichtung 4 angeordnet ist, abgehoben. Es können mehrere Einrichtungen 1 entlang des Transportweges angeordnet und der Transport und das Abheben der Produkte 2 kann bei kontinuierlichem oder diskontinuierlichem Transport erfolgen.

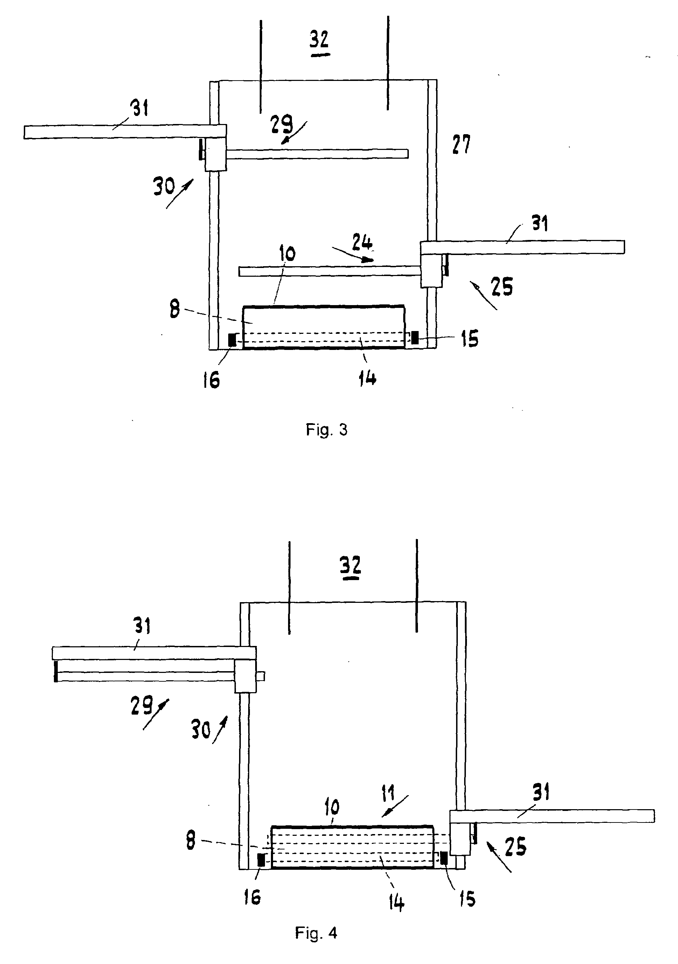

Zum Zweck des Abhebens der Produkte 2 von der Fördervorrichtung 3 weist letzteres ein Förderelement 5 auf, das einen Förderabschnitt des Förderweges bildet. Dieses Förderelement 5 ist wenigstens so lang wie die längsten, zum Stapeln anfallenden Produkte. Dem Förderelement 5 ist mindestens ein Förderabschnitt 6 zur Zuführung der Produkte 2 vorgeschaltet und es kann ein Förderabschnitt 7 oder eine andere Verarbeitungsstation nachgeschaltet sein.
Bei dem Förderelement 5 handelt es sich um ein um zwei voneinander distanzierte Umlenkrollen 8, 9 umlaufendes endloses Förderband 10, das mittels Fördertrum eine Tragfläche 11 für die zu transportierenden Produkte 2 bildet. Die Tragfläche 11 ist durch jeweils ein Rollenpaar 12 unterbrochen, um welches das Förderband 10, nach unten eine Schlaufe 13 bildend umgelenkt wird. Von diesen Rollenpaaren 12 sind wenigstens zwei auf die Länge der wirksamen Produkterfassung (regelmässig) verteilt angeordnet. In der Fig. 1 sind vier solche Rollenpaare 12 vorgesehen. Die Bandschlaufe 13 wird jeweils durch eine Einzugsrolle 14 erzeugt, durch welche das Förderband 10 aus der gestreckten Lage (siehe Fig. 2) über ein Rollenpaar 12 zwischen dieses nach unten gezogen wird. Die für das in den Fig. 1 und 2 dargestellte Ausführungsbeispiel angewandten vier Einzugsrollen 14 sind jeweils mit dem einen Ende in einem seitlich des Förderelementes 5 angeordneten gemeinsamen Rollenträger 15, 16 gelagert (siehe auch Fig. 3 und 4).
Das Spannen des Förderbandes 10 erfolgt durch eine auf das Leertrum 17 einwirkende Spannvorrichtung 18. Hierzu verläuft das Förderband 10 um drei flaschenzugähnlich angeordnete Spannrollen 19, 20 und Umlenkwalze 21 nachdem resp. bevor das Förderband 10 um Umlenkrollen 22, 23 in eine vertikale Richtung umgelenkt worden ist. Durch eine Zugkraft Z an den Walzen 19, 20 wird das Förderband 10 jeweils vorgespannt.

Die Rollenträger 15, 16 werden durch eine nicht dargestellte Haltevorrichtung unterhalb dem Niveau der Tragfläche 11 zurückgehalten, sodass ein Huborgan 24 einer Hubvorrichtung 25 unter der Tragfläche 11 in die Bandschlaufen 13 eingeführt werden kann.
Die Hubvorrichtung 25 besteht weiterhin aus einem Tragwerk 26, das an einem Gestell 27 senkrecht verstell- und feststellbar geführt ist und an dem Tragstäbe 28 einenends befestigt sind, so dass sie auslegerartig von der Seite in den Wirkungsraum der Hubvorrichtung 25 ragen. In Fig. 1 ist ein aus vier Tragelementen 28 gebildetes Huborgan 24 ersichtlich, mit dem auch erheblich kürzere Produkte 2 oder Pakete von dem gabelförmigen Huborgan erfassbar sind.

Fig. 2 zeigt die Einrichtung 1 mit lückenloser Tragfläche 11 und ausserbetrieblicher Hubvorrichtung 25 sowie ausgehobenen Einzugsrollen 14 als einfache Fördervorrichtung 3. Hierzu sind das Huborgan 24 der Hubvorrichtung 25 und der Rollenträger 16 mit einem motorisch antreibbaren (nicht sichtbaren) Hubwerk verbunden, welches Huborgan 24 und Rollenträger 16 in die in den Fig. 1 und 2 gezeigte Lage versetzen. Mit dem Ausfahren der Einzugsrollen 14 aus den Bandschlaufen 13 wird das Förderband 10 durch Spannvorrichtung 18 zu einer über den Rollenpaaren 12 lückenlosen ebenen Tragfläche 11 nachgespannt.
Dadurch ist die Einrichtung 1 teilweise ausgeschaltet und nurmehr als reines Förderelement der Fördervorrichtung 3 betreibbar.
Selbstverständlich können auch mehrere Einrichtungen 1 in eine Fördervorrichtung 3 eingebaut sein.

Die Fig. 3 und 4 zeigen die Einrichtung 1 in Transportrichtung betrachtet, wobei sich die Einzugsrollen 14 eine Bandschlaufe 13 bildend unterhalb der Tragfläche 11 des Förderbandes 10 befinden, das heisst, die Tragfläche 11 weist Lücken auf, in die ein Huborgan einer Hubvorrichtung mit den Tragstäben 28 eintauchen kann.
Die Fig. 3 und 4 veranschaulichen weiterhin eine Einrichtung 1 mit zwei beidseits der Fördervorrichtung 29 resp. des Förderelements 5 sich gegenüberstehenden antreibbaren Huborganen 24, 29 jeweils einer Hubvorrichtung 25, 30, die an dem Gestell 27 in der Höhe verfahrbar sind. Jede Hubvorrichtung 25, 30 ist unabhängig von der anderen am Gestell 27 antreibbar. Die Tragstäbe 28 eines Huborgans 24, 29 sind jeweils gemeinsam teleskopartig von einer Betriebsstellung, in der sie sich über dem Förderelement 5 befinden, in eine Ausserbetriebsstellung seitlich des Förderelementes versetzbar. Hierzu ist wie angedeutet jeweils ein Pneumatikzylinder 31 vorgesehen. Selbstverständlich könnte zum gleichen Zweck auch eine mechanische Antriebsvorrichtung verwendet werden, wie beispielsweise zur Höhenverstellung einer Hubvorrichtung 25, 30, für die ein über eine obere und eine untere Rolle umlaufender, beidenends an dem Tragwerk 26 der Huborgane 24, 29 befestigter Zahnriemen eines nicht dargestellten Hubwerks vorgesehen ist. Das höhenverstellbare Huborgan 24, 29 ist jeweils an zwei das Tragwerk 26 durchsetzenden, vertikalen Säulen geführt.
Oberhalb der Tragfläche 11, auf der maximal verfahrbaren Höhe der Huborgane 24, 29, ist eine Vertikalführung 32 angeordnet, in die ein oder mehrere Produkte 2 übereinander zur Aufrechterhaltung ihrer Lage bei der Stapelbildung positionierbar sind. Diese Vertikalführung 32 ist den zu stapelnden Produkten 2 entsprechend formatverstellbar ausgebildet.

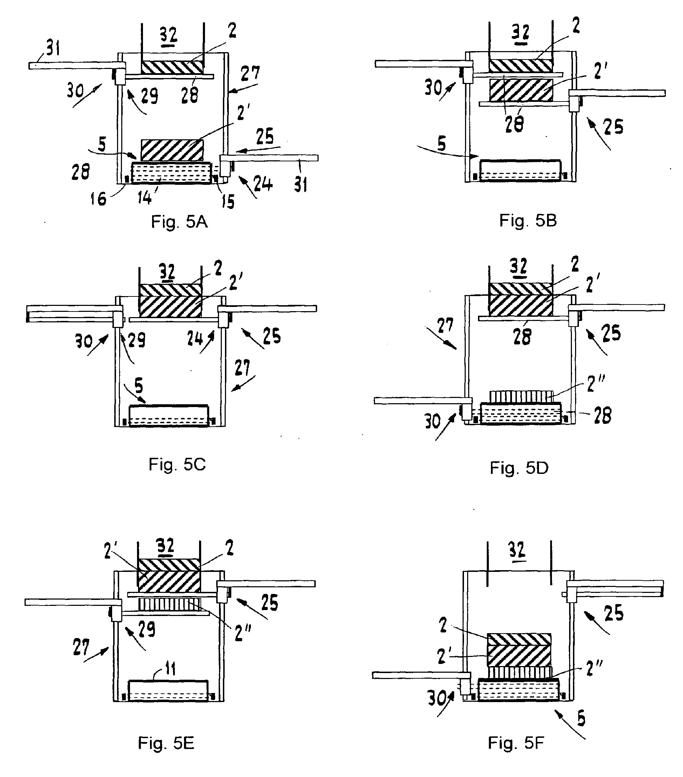

Die Funktionsweise der Einrichtung 1 zum Stapeln von Produkten wird anschliessend anhand der Fig. 5A bis 5F erläutert.
In Fig. 5A ist durch das Huborgan 29 der Hubvorrichtung 30 ein Produkt 2 von der Tragfläche 11 abgehoben und in der Vertikalführung 32 positioniert worden, währenddem ein auf dem Förderelement 4 nächstfolgendes Produkt 2' über den in die durch Bandschlaufen 13 gebildeten Lücken der Tragfläche 11 eingefahrenen Huborgan 24 der Hubvorrichtung 25 zum Erfassen bereitsteht oder im Begriff die Stapelvorrichtung 4 zu passieren ist.
Gemäss Fig. 5B wurde das Produkt 2' durch Hubvorrichtung 25 vom Förderelement 5 abgehoben und unterhalb des Huborgans 29 resp. dessen Tragstäbe 28 angehoben. Vorzugsweise steht das Produkt 2' an der Unterseite der Tragstäbe 28 nicht an, damit es beim Ausziehen der Tragstäbe 28 des Huborgans 29 im Stapelverbund auf den Tragstäben 28 des Huborgans 25 nicht verschoben wird.
In einem nächsten Schritt (Fig. 5C) wird das Huborgan 29 unter dem Produkt 2 seitlich herausgezogen, sodass letzteres, in der Vertikalführung 32 seitlich fixiert, auf das darunter sich befindende Produkt 2' aufzuliegen kommt. Unmittelbar anschliessend werden beide Produkte 2, 2' weiter angehoben, soweit bis das untere 2' die Vertikalführung 32 erreicht hat. Anschliessend erreicht gemäss Fig. 5D ein Produkt 2" die Erfassungsposition der Stapelvorrichtung 4 unterhalb der Vertikalführung 32 auf dem Förderelement 5, wo es von dem inzwischen unter die Tragfläche 11 abgesenkten Huborgan 29 der Hubvorrichtung 30 erwartet wird. Dieses dritte Produkt 2" wird nun wie Produkt 2" unter das Paket aus dem oberen Produkt 2' und dem unteren Produkt 2" angehoben (siehe Fig. 5E). Daraufhin wird wiederum Huborgan 25 aus dem Stapel ausgezogen, so dass drei Produkte 2, 2' und 2" gestapelt auf den Tragstäben 28 des Huborgans 29 liegen.
Das fertige Paket resp. der aus drei Produkten 2, 2' und 2" gebildete Stapel wird nun durch Hubvorrichtung 30 auf die Tragfläche 11 des Förderelementes 5 abgesenkt und von diesem auf der Fördervorrichtung 3 weitertransportiert (Fig. 5F).

Die Verarbeitung zu Stapeln wird mit einer Steuerung (nicht dargestellt) durchgeführt, die mit einem programmierbaren Rechner verbunden ist. Durch ein Verarbeitungsprogramm im Rechner können mit der Einrichtung 1 aus den zugeführten Produkten 2, 2', 2" automatisch Produktestapel gebildet werden. Das Eintreffen der zugeführten Produkte 2, 2', 2" wird beispielsweise durch vor der Einrichtung 1 platzierte Sensoren festgestellt, sodass ein vollautomatischer Betrieb bei der Bildung von Stapeln entsteht. Die zu stapelnden Produkte 2, 2', 2" werden durch das Programm des Rechners bestimmt, d.h., einzelne Produkte 2 können durch die Einrichtung 1 durchlaufen, ohne gestapelt zu werden.

Die Produktestapel oder Einzelprodukte können nach der Einrichtung 1 verpackt oder umreift werden und anschliessend adressiert bzw. zum Versand einer Palettiervorrichtung zugeführt werden.
Zur genauen Positionierung der Produkte in der Einrichtung 1 kann auf dem Transportweg vor der Einrichtung 1 auch ein über die Tragfläche 11 hochstellbarer Anschlag (nicht ersichtlich) benutzt werden.

## Patentansprüche

1. Einrichtung (1) zur wahlweisen Bildung von Stapeln aus mehreren, auf einem Transportweg hintereinander geförderten Produkten (2, 2', 2") und/oder zur Aenderung der Reihenfolge von auf einem Transportweg nacheinander geförderten Produkten (2, 2', 2"), bestehend aus einer die Produkte (2, 2', 2") transportierenden Fördervorrichtung (3) und wenigstens einer, die Produkte (2, 2', 2") auf dem Förderweg von der Fördervorrichtung (3) aufnehmenden und zurücksetzenden Hubvorrichtung (25, 30), die durch ein die Produkte (2, 2', 2") an der Unterseite erfassendes, wenigstens an einer Seite eines aus einem Förderabschnitt der Fördervorrichtung (3) gebildeten Förderelementes (5) ein rechtwinklig zur Förderrichtung (F) anheb- und unter die Tragfläche (11) der Fördervorrichtung (3) absenkbares Huborgan (24, 29) aufweist, wobei das Huborgan (24, 29) durch mehrere an einem Tragwerk (26) in Abständen rechtwinklig zur Förderrichtung (F) abstehende Tragstäbe (28) ausgebildet ist,
**dadurch gekennzeichnet, dass**
a) die Fördervorrichtung (3) ein Fördertrum eines umlaufenden Förderbandes (10) aufweist, dessen Tragfläche (11) im Wirkbereich des Huborgans (24, 29) mehrfach unterbrochen ist,
b) die Unterbrüche der Tragfläche (11) durch unter die Tragfläche (11) und zurück umgelenkte Abschnitte des Förderbandes (10) gebildet sind,
c) die umgelenkten Abschnitte des Förderbandes (10) durch gemeinsam absenkbare Rollen (14) gebildet sind und
d) die Rollen (14) gemeinsam über die Tragfläche (11) der Fördervorrichtung (3) anhebbar sind.

2. Einrichtung nach Anspruch 1, **dadurch gekennzeichnet, dass** zur Aufhebung der Unterbrüche in der Tragfläche (11) das Förderband (3) durch eine Spannvorrichtung (18) nachspannbar ist.

3. Einrichtung nach einem der Ansprüche 1 oder 2, **dadurch gekennzeichnet, dass** das obere Ende der Hubvorrichtung (24, 29) durch eine formatverstellbare Vertikalführung (32) ausgebildet ist.

4. Einrichtung nach Anspruch 1, **dadurch gekennzeichnet, dass** eine Erfassungsposition der Produkte (2) auf der Tragfläche (11) unterhalb der Vertikalführung (32) angeordnet ist.

5. Einrichtung nach Anspruch 1, **dadurch gekennzeichnet, dass** diese zur automatischen Durchführung einer Stapelverarbeitung mit einer rechnerprogrammierten Steuerung verbunden ist.

## Claims

1. Device (1) for selectively building stacks from a succession of products (2, 2', 2") conveyed on a transport path and/or for changing the sequence of products (2, 2', 2") successively conveyed on a transport path, consisting of a conveying apparatus (3) transporting the products (2, 2', 2") and at least one lifting apparatus (25, 30) which receives the products (2, 2', 2") on the conveying path from the conveying apparatus (3) and puts them back again, and comprises, at least on one side of a conveying element (5) formed from a section of the conveying apparatus (3), a lift unit (24, 29) raisable at right angles to the conveying direction (F) and lowerable below the carrying surface (11) of the conveying apparatus (3), wherein the lift unit (24, 29) is configured as a plurality of carrier bars (28) spaced apart at intervals and projecting at right angles to the conveying direction (F),
**characterized in that**
a) the conveying apparatus (3) comprises a conveying strand of an endless conveyor belt (10) whose carrying surface (11) is repeatedly interrupted in the active zone of the lift unit (24, 29),
b) the breaks in the carrying surface (11) are formed by sections of conveyor belt (10) deflected below the carrying surface (11) and back up again,
c) the deflected sections of the conveyor belt (10) are formed by rollers (14) lowerable in concert, and
d) the rollers (14) are raisable in concert above the carrying surface (11) of the conveying apparatus (3).

2. Device according to Claim 1, **characterized in that** the conveyor belt (3) can be retensioned by a tensioning apparatus (18) to remove the breaks in the carrying surface (11).

3. Device according to either of Claims 1 and 2, **characterized in that** the upper end of the lifting apparatus (24, 29) [*sic*] is configured as a vertical guide (32) adjustable in format.

4. Device according to Claim 1, **characterized in that** a gathering position for the products (2) is located on the carrying surface (11) underneath the vertical guide (32).

5. Device according to Claim 1, **characterized in that** it is connected to a computer-programmed control for automatic execution of stack processing.

## Revendications

1. Équipement (1) pour former sélectivement des piles constituées de plusieurs produits (2, 2', 2") transportés les uns à la suite des autres sur un parcours de transport et/ou pour modifier l'ordre de succession de produits (2, 2', 2") successivement transportés sur un parcours de transport, constitué d'un dispositif de transport (3) transportant les produits (2, 2', 2") et d'au moins un dispositif de levage (25, 30) prenant les produits (2, 2', 2") du dispositif de transport (3) sur le parcours de transport et les y replaçant, dispositif qui présente, au moins sur un côté d'un élément de transport (5) consistant en un tronçon de transport du dispositif de transport (3), un organe de levage (24, 29) prenant en charge les produits (2, 2', 2") sur le dessous, organe qui peut être relevé perpendiculairement à la direction de transport (F) et abaissé en dessous de la surface porteuse (11) du dispositif de transport (3), sachant que l'organe de levage (24, 29) est formé par plusieurs barres porteuses (28) partant en saillie à intervalles perpendiculairement à la direction de transport (F) sur une structure porteuse (26), **caractérisé en ce que**
a) le dispositif de transport (3) présente un brin de transport d'une bande transporteuse circulante (10), dont la surface porteuse (11) est plusieurs fois interrompue dans la région d'action de l'organe de levage (24, 29),
b) les interruptions de la surface porteuse (11) sont formées par des tronçons de la bande transporteuse (10) qui sont déviés en dessous de la surface porteuse (11) et en retour,
c) les tronçons déviés de la bande transporteuse (10) sont formés par des rouleaux (14) pouvant être conjointement abaissés, et
d) les rouleaux (14) peuvent être conjointement relevés au-dessus de la surface porteuse (11) du dispositif de transport (3).

2. Équipement selon la revendication 1, **caractérisé en ce que**, afin de supprimer les interruptions dans la surface porteuse (11), la bande transporteuse (3) peut être retendue par un dispositif tendeur (18).

3. Équipement selon la revendication 1 ou 2, **caractérisé en ce que** l'extrémité supérieure du dispositif de levage (24, 29) est formée par un guide vertical (32) de format réglable.

4. Équipement selon la revendication 1, **caractérisé en ce qu'**une position de prise en charge des produits (2) est disposée sur la surface porteuse (11) en dessous du guide vertical (32).

5. Équipement selon la revendication 1, **caractérisé en ce que** cet équipement est relié, pour la commande automatique d'un traitement en piles, à une commande informatiquement programmée.
